# FASCICULE DE BREVET EUROPEEN

(11) **EP 3 702 232 B1**
(45) Date de publication et mention de la délivrance du brevet: **06.12.2023**
(21) Numéro de dépôt: 20160115.0
(22) Date de dépôt: 28.02.2020
(51) Int. Cl.: B61C 17/00, B61C 3/00, B61C 5/02

(54) **VÉHICULE FERROVIAIRE À AMÉNAGEMENT ADAPTÉ AUX OPÉRATIONS DE MAINTENANCE**
SCHIENENFAHRZEUG MIT EINER FÜR WARTUNGSARBEITEN ANGEPASSTEN ANORDNUNG
RAILWAY VEHICLE WITH ARRANGEMENT ADAPTED FOR MAINTENANCE OPERATIONS

(30) Priorité: 01.03.2019 FR 1902161
(43) Date de publication de la demande: 02.09.2020
(73) Titulaire: ALSTOM Holdings, 93400 Saint-Ouen-sur-Seine (FR)
(72) Inventeur: VANDAMME, Thibault, 90000 Belfort (FR); CHIARANDINI, Bruno, 90000 Belfort (FR); HEIDET, Arnaud, 90000 Belfort (FR)
(74) Mandataire: Lavoix

(56) Documents cités:
- WO-A1-2007/137872
- CN-A- 103 010 224
- CN-U- 207 274 670
- DE-A1-102005 044 744

## Description

La présente invention concerne un véhicule ferroviaire, du type comprenant un châssis d'axe longitudinal de direction X s'étendant entre une première et une seconde parois latérales et comprenant au moins un premier groupe de modules d'équipement à faible maintenance et au moins un deuxième groupe de modules d'équipement à forte maintenance, le véhicule ferroviaire comprenant au moins un couloir d'axe longitudinal de direction X.

Le document CN 103 010 224 A décrit un véhicule ferroviaire comprenant un châssis s'étendant longitudinalement entre une première et une seconde parois latérales.

Le document US 2008/0105157 décrit un véhicule ferroviaire comprenant un châssis d'axe longitudinal. Le châssis s'étend entre une première et une seconde parois latérales. Le véhicule ferroviaire comprend un ensemble de modules d'équipements ainsi qu'un couloir. L'ensemble de modules d'équipement s'étend le long d'au moins une partie de la première paroi et le couloir s'étend le long d'au moins une partie de la seconde paroi.

Un tel arrangement du groupe de modules d'équipement et du couloir permet d'optimiser l'espace transversal utilisable du véhicule ferroviaire. L'utilisation d'un unique couloir longitudinal déporté sur le véhicule ferroviaire permet notamment l'utilisation d'ensembles de modules d'équipement plus larges que dans une configuration de véhicule ferroviaire utilisant deux couloirs longitudinaux.

Le véhicule ferroviaire précité ne donne cependant pas entière satisfaction, notamment pour les opérations de maintenance du véhicule. La largeur accrue du groupe de module d'équipement ferroviaire par rapport à une configuration utilisant deux couloirs longitudinaux engendre en effet une difficulté accrue d'accès aux modules compris dans l'ensemble de module d'équipement, notamment à ceux situés le long de la paroi opposée au couloir, la maintenance du véhicule étant par conséquent rallongée.

Un des buts de l'invention est de proposer un véhicule ferroviaire dans lequel l'utilisation de l'espace latéral est optimisée, notamment par l'utilisation d'un unique couloir longitudinal, tout en réduisant la complexité et la durée des opérations de maintenance.

A cet effet, l'invention a pour objet un véhicule ferroviaire conforme à la revendication 1.

Un tel véhicule ferroviaire permet de faciliter l'accès aux modules à forte maintenance depuis le véhicule ferroviaire tout en utilisant un unique couloir longitudinal déporté sur le véhicule ferroviaire et un ensembles de modules d'équipement plus larges que dans une configuration de véhicule ferroviaire utilisant deux couloirs longitudinaux. L'accès facilité aux modules à forte maintenance, en d'autres termes les modules les plus fréquemment contrôlés ou réparés, permet ainsi de réduire la complexité et la durée des opérations de maintenance.

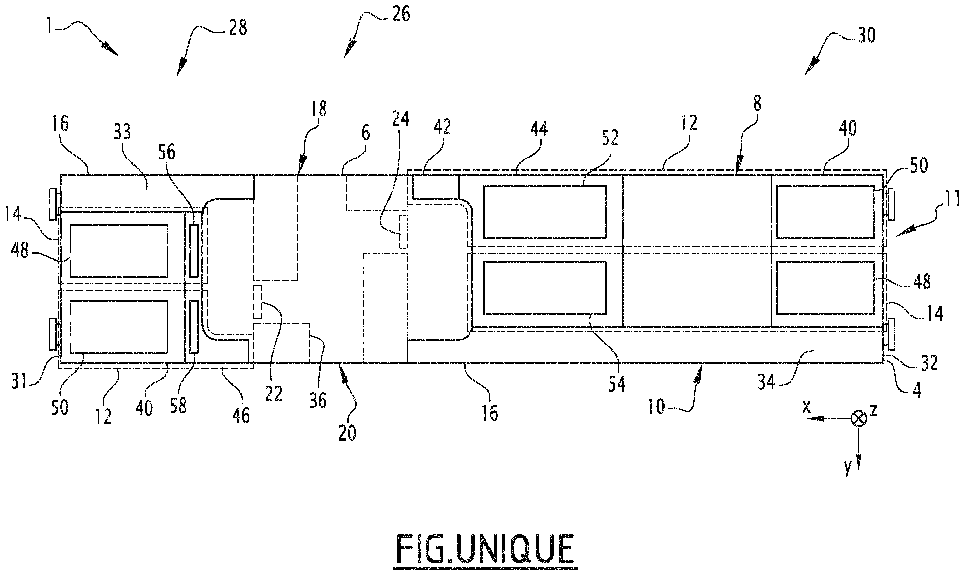

L'invention sera mieux comprise à la lecture de la description qui va suivre, donnée uniquement à titre d'exemple non limitatif et faite en se référant au dessin sur lequel [Fig 1] la figure unique est une représentation schématique vue de dessus d'un véhicule ferroviaire selon l'invention.

Dans la description qui suit, on considère une base orthonormée directe (X, Y, Z). La direction d'élévation Z est définie selon la hauteur du véhicule et correspond par exemple à la direction verticale lorsque le véhicule est sur une voie horizontale. La direction longitudinale X correspond à la direction avant-arrière du véhicule et la direction transversale Y correspond à la largeur du véhicule.

Les termes « supérieur » et « inférieur » ainsi que « haut » et « bas » sont définis par rapport à la direction d'élévation Z. Les termes « gauche » et « droite » sont définis par rapport à la direction transversale Y, la gauche étant définie comme la partie située sur la gauche du véhicule, selon la perspective d'un passager dans le sens de la marche, la droite correspondant au côté opposé du véhicule selon la direction transversale Y. Les termes « avant » et « arrière » sont définis par rapport à la direction longitudinale X, par rapport au sens de la marche du véhicule.

Le véhicule ferroviaire 1 comprend un châssis 4 d'axe longitudinal de direction X. Le châssis 4 définit une première 8 et une seconde paroi latérale 10 entre lesquelles s'étend un volume intérieur du véhicule. Selon un mode de réalisation, le véhicule ferroviaire 1 comprend une cabine de pilotage 6 installée sur le châssis 4 dans le volume intérieur du véhicule.

Le véhicule ferroviaire 1 comprend un ensemble de modules d'équipement 11 comprenant un premier groupe de modules d'équipement 12 et un deuxième groupe de modules d'équipement 14. Le véhicule ferroviaire 1 comprend par ailleurs un couloir 16. Le premier 12 et le deuxième 14 groupes de modules d'équipement ainsi que le couloir 16 s'étendent entre la première 8 et la seconde 10 parois latérales.

En particulier, le premier groupe de modules d'équipement 12 s'étend le long d'au moins une partie de la première paroi latérale 8 ou de la seconde paroi latérale 10. Le couloir 16 s'étend le long d'au moins une partie de la première paroi latérale 8 ou de la seconde paroi latérale 10, et plus particulièrement le long de la paroi opposée à la paroi selon laquelle s'étend le premier groupe de modules d'équipement 12. Le deuxième groupe de modules d'équipement 14 s'étend entre le premier groupe de modules d'équipement 12 et le couloir 16, contre ledit premier groupe de modules d'équipement 12.

Le châssis 4 est de forme allongée selon l'axe longitudinal de direction X. La projection du châssis 4 dans un plan (X, Y) est sensiblement rectangulaire.

La première paroi latérale 8 s'étend suivant un plan passant par une première longueur 18 du rectangle défini par la projection du châssis 4 dans le plan (X, Y). La première paroi latérale 8 s'étend selon un plan d'élévation sensiblement parallèle au plan de référence (X, Z).

La deuxième paroi latérale s'étend suivant un plan passant par une deuxième longueur 20 du rectangle défini par la projection du châssis 4 dans le plan (X, Y). Tout comme la première paroi latérale 8, la seconde paroi latérale 10 s'étend en selon un plan d'élévation sensiblement parallèle au plan de référence (X, Z).

Les première et deuxième parois latérales 8, 10 s'étendent de part et d'autre d'un plancher du véhicule ferroviaire 1 sur lequel sont agencés l'ensemble de modules d'équipement 12, 14 et, le cas échéant, la cabine de pilotage 6.

La cabine de pilotage 6 est solidaire du châssis 4. La cabine 6 délimite un volume fermé du véhicule ferroviaire 1. La cabine de pilotage 6 comprend par exemple une première 22 et une deuxième 24 porte. La cabine de pilotage 6 est placée selon la direction longitudinale dans une région centrale 26 du véhicule ferroviaire et définit une région avant 28 du véhicule ferroviaire, ainsi qu'une région arrière 30 du véhicule ferroviaire, la région avant 28 étant la région du véhicule ferroviaire s'étendant selon la direction longitudinale entre la cabine de pilotage 6 et une extrémité avant 31 du véhicule et la région arrière étant la région du véhicule ferroviaire s'étendant selon la direction longitudinale entre la cabine de pilotage 6 et une extrémité arrière 32 du véhicule.

Le couloir 16 s'étend sur le plancher et comprend un tronçon avant 33 de couloir et un tronçon arrière 34 de couloir.

Le tronçon avant 33 de couloir s'étend par exemple dans la région avant 28 du véhicule ferroviaire 1, notamment depuis la cabine de pilotage 6 vers l'extrémité avant 31 du véhicule ferroviaire 1. Le tronçon avant 33 s'étend par exemple le long de la première paroi latérale 8.

Le tronçon arrière 34 de couloir s'étend par exemple dans la région arrière 30 du véhicule ferroviaire 1 notamment depuis la cabine de pilotage 6 vers l'extrémité arrière 32 du véhicule ferroviaire. Le tronçon arrière 34 s'étend par exemple le long de la seconde paroi latérale 10.

Selon un mode de réalisation alternatif, l'ensemble du couloir 16 s'étend uniquement d'un côté du véhicule ferroviaire 1, le long de la première paroi latérale 8 ou le long de la deuxième paroi latérale 10. Le tronçon avant 33 de couloir s'étend par exemple dans la région avant 28 du véhicule le long de la première 8 ou de la seconde 10 paroi latérale et le tronçon arrière 34 de couloir s'étend par exemple dans la région arrière 30 le long de la première 8 ou de la seconde 10 paroi latérale. Dans le cas où l'ensemble du couloir 16 s'étend le long de la première paroi latérale 8, l'ensemble du premier groupe de modules d'équipement 12 s'étend le long de la deuxième paroi latérale 10 et dans le cas où l'ensemble du couloir 16 s'étend le long de la deuxième paroi latérale 10, l'ensemble du deuxième groupe de modules d'équipement 14 s'étend le long de la première paroi latérale 8.

Selon tous les modes de réalisation, le couloir 16 est unique et délimite un unique espace de circulation le long de la direction longitudinale X.

La première porte 22 s'ouvre par exemple sur le tronçon arrière 34 de couloir tandis que la deuxième porte 24 s'ouvre sur le tronçon avant 33 de couloir.

La cabine de pilotage 6 relie le tronçon avant 33 et le tronçon arrière 34 de couloir. La cabine de pilotage 6 comprend un passage 36 liant le tronçon avant 33 de couloir et le tronçon arrière 34 de couloir, ce passage 36 s'étendant notamment entre la première 22 et la deuxième 24 portes.

Le premier groupe 12 de modules d'équipement comprend les modules nécessitant une faible maintenance tandis que le deuxième groupe 14 de modules d'équipement comprend les modules nécessitant une forte maintenance. La maintenance peut être corrective ou préventive. La notion de faible maintenance et de forte maintenance est définie relativement entre les modules d'équipement de l'ensemble de modules d'équipement. Un module de forte maintenance est donc un module nécessitant une plus grande fréquence de maintenance qu'un module de faible maintenance. Un module nécessitant une forte maintenance est par exemple un module nécessitant un contrôle ou une réparation fréquente. De façon contraire, un module nécessitant une faible maintenance est un module nécessitant peu ou pas de contrôle ou de réparation. Un opérateur doit donc accéder plus fréquemment aux modules nécessitant une forte maintenance qu'aux modules nécessitant une faible maintenance. Un opérateur accède donc plus fréquemment aux modules du deuxième groupe de modules d'équipement 14 qu'aux modules du premier groupe d'équipement 12. Selon un exemple, un module de forte maintenance est défini par une fréquence de maintenance en moyenne supérieure ou égale à deux opérations de maintenance par an et un module de faible maintenance est défini par une fréquence de maintenance en moyenne inférieure à deux opérations de maintenance par an.

Le deuxième groupe de modules d'équipements 14 s'étend le long du couloir 16. Le premier groupe de modules d'équipements 12 s'étend entre le deuxième groupe de modules d'équipements 14 et, selon le mode de réalisation, la première 8 et/ou de la seconde 10 parois latérales Le deuxième groupe de module d'équipement 14 est donc plus facilement accessible que le premier module d'équipement 12. Les opérations de maintenance sur le deuxième module d'équipement peuvent être facilement effectuées depuis le couloir 16. Les opérations de maintenance sur le premier module d'équipement peuvent être effectuées depuis un quai, en accédant au volume intérieur du véhicule par des ouvertures dans la paroi latérale contre laquelle s'étend le premier module groupe de modules d'équipement 12.

La position du premier 12 et du deuxième 14 groupes de modules d'équipements ainsi que du couloir 16 entre la première 8 et la seconde 10 paroi latérale combiné à l'agencement des modules d'équipement entre le premier 12 et le deuxième 14 groupe de modules d'équipement assure que les modules d'équipement à forte maintenance sont facilement accessibles, notamment depuis le couloir 16, et la durée des opérations de maintenance est ainsi réduite.

L'ensemble des modules d'équipement 11 comprend par exemple une unité de puissance 40, une unité de climatisation 42, une unité de compression et de transformation 44 ainsi qu'une unité de traction 46.

L'unité de puissance 40, l'unité de compression et de transformation 44 et l'unité de traction 46 comprennent chacune des modules appartenant au premier groupe 12 de modules d'équipement et au deuxième 14 groupe de modules d'équipement. L'unité de climatisation 42 comprend des modules appartenant au premier groupe 12 de modules d'équipement.

L'unité de puissance 40 comprend par exemple un moteur diesel 48 ainsi qu'un groupe de refroidissement 50, le moteur diesel 48 nécessitant une plus forte maintenance que le groupe de refroidissement 50. Le groupe de refroidissement 50 est situé dans le premier groupe de modules d'équipement 12 tandis que le moteur diesel 48 est situé dans le deuxième groupe de modules d'équipement 14.

L'unité de compression et de transformation 44 comprend par exemple un compresseur d'air 52 et un transformateur 54, le transformateur 54 nécessitant une plus forte maintenance que le compresseur d'air 52. Le compresseur d'air 52 est situé dans le premier groupe de modules d'équipement 12 tandis que le transformateur 54 est situé dans le deuxième groupe de modules d'équipement 14.

L'unité de traction 46 comprend par exemple un groupe électronique 56 et un système de refroidissement 58, le groupe électronique 56 nécessitant une plus forte maintenance que le système de refroidissement 58. Le système de refroidissement 58 est situé dans le premier groupe de modules d'équipement 12 tandis que le groupe électronique 56 est situé dans le deuxième groupe de modules d'équipement 14.

Ainsi, au cours des opérations de maintenance, un opérateur est apte à rapidement accéder aux modules nécessitant une forte maintenance, situés dans le deuxième groupe de module d'équipement. Cet agencement de l'ensemble de modules d'équipement 11 du véhicule ferroviaire 1 permet une réduction de la complexité et de la durée des opérations de maintenance.

## Revendications

1. Véhicule ferroviaire (1) comprenant un châssis (4) d'axe longitudinal de direction X s'étendant entre une première (8) et une seconde (10) parois latérales et comprenant au moins un premier groupe de modules d'équipement (12) à faible maintenance et au moins un deuxième groupe de modules d'équipement (14) à forte maintenance, le véhicule ferroviaire (1) comprenant au moins un couloir (16) d'axe longitudinal de direction X ;
**caractérisé en ce que** le premier groupe de modules d'équipement (12) s'étend le long d'au moins une partie de la première paroi latérale (8) ou de la seconde paroi latérale (10), le couloir (16) s'étend le long d'au moins une partie de la première paroi latérale (8) ou de la seconde paroi latérale (10) et le deuxième groupe de modules d'équipement (14) s'étend entre le premier groupe de modules d'équipement (12) et le couloir (16), contre ledit premier groupe de modules d'équipement (12).

2. Véhicule ferroviaire (1) selon la revendication 1, comprenant en outre une cabine de pilotage (6), le couloir (16) s'étendant de part et d'autre de la cabine de pilotage (6) selon la direction longitudinale.

3. Véhicule ferroviaire (1) selon la revendication 2, dans lequel le couloir (16) comprend un tronçon avant de couloir (33) s'étendant, d'un côté de la cabine de pilotage (6), le long de la première paroi latérale (8), le premier groupe de modules d'équipement (12) s'étendant le long de la deuxième paroi latérale (10), et, de l'autre côté de la cabine de pilotage (6), un tronçon arrière de couloir (34) le long de la seconde paroi latérale (10), le premier groupe de modules d'équipement (12) s'étendant le long de la première paroi latérale (8).

4. Véhicule ferroviaire (1) selon la revendication 3, dans lequel la cabine de pilotage (6) comprend un passage (36) s'étendant entre le tronçon avant de couloir (33) et le tronçon arrière de couloir (34).

5. Véhicule ferroviaire (1) selon l'une quelconque des revendications 1 à 4, dans lequel le premier groupe de modules d'équipement (12) comprend des modules à forte maintenance définis par une fréquence de maintenance en moyenne supérieure ou égale à deux opérations de maintenance par an et le deuxième groupe de modules d'équipements (14) comprend des modules à faible maintenance définis par une fréquence de maintenance en moyenne inférieure à deux opérations de maintenance par an.

6. Véhicule ferroviaire (1) selon l'une quelconque des revendications 1 à 5, comprenant au moins une unité de puissance moteur (40) comprenant un moteur diesel (48) et un groupe de refroidissement (50), le premier groupe de modules d'équipements (12) comprenant ledit groupe de refroidissement (50) et le deuxième groupe de modules d'équipements (14) comprenant ledit moteur diesel (48).

7. Véhicule ferroviaire (1) selon l'une quelconque des revendications 1 à 6, dans lequel le premier groupe de modules d'équipement (12) comprend au moins une unité de climatisation (42).

8. Véhicule ferroviaire (1) selon l'une quelconque des revendications 1 à 7, comprenant au moins une unité de compression et de transformation (44) comprenant un compresseur d'air (52) et un transformateur (54), le premier groupe de modules d'équipement (12) comprenant ledit compresseur (52) et le deuxième groupe de modules d'équipement (14) comprenant ledit transformateur (54).

9. Véhicule ferroviaire (1) selon l'une quelconque des revendications 1 à 8, comprenant au moins une unité de traction (46) comprenant un groupe électronique (56) et un système de refroidissement (58), le premier groupe de modules d'équipement (12) comprenant ledit système de refroidissement (58) et le deuxième groupe de modules d'équipement (14) comprenant ledit groupe électronique (56).

## Patentansprüche

1. Schienenfahrzeug (1), umfassend ein Fahrgestell (4) mit Längsachse in Richtung X, das sich zwischen einer ersten (8) und einer zweiten (10) Seitenwand erstreckt und mindestens eine erste Gruppe von Ausstattungsmodulen (12) mit geringer Wartung und mindestens eine zweite Gruppe von Ausstattungsmodulen (14) mit intensiver Wartung umfasst, das Schienenfahrzeug (1) umfassend mindestens einen Gang (16) mit Längsachse in Richtung X;
**dadurch gekennzeichnet, dass** die erste Gruppe von Ausstattungsmodulen (12) sich entlang mindestens eines Teils der ersten Seitenwand (8) oder der zweiten Seitenwand (10) erstreckt, der Gang (16) sich entlang mindestens eines Teils der ersten Seitenwand (8) oder der zweiten Seitenwand (10) erstreckt und die zweite Gruppe von Ausstattungsmodulen (14) sich zwischen der ersten Gruppe von Ausstattungsmodulen (12) und dem Gang (16) gegen die erste Gruppe von Ausstattungsmodulen (12) erstreckt.

2. Schienenfahrzeug (1) nach Anspruch 1, ferner umfassend einen Führerstand (6), wobei sich der Gang (16) auf beiden Seiten des Führerstands (6) in Längsrichtung erstreckt.

3. Schienenfahrzeug (1) nach Anspruch 2, wobei der Gang (16) einen vorderen Gangabschnitt (33) umfasst, der sich auf einer Seite des Führerstands (6) entlang der ersten Seitenwand (8) erstreckt, sich die erste Gruppe von Ausstattungsmodulen (12) entlang der zweiten Seitenwand (10) erstreckt, und, sich auf der anderen Seite des Führerstands (6), ein hinterer Abschnitt eines Gangs (34) entlang der zweiten Seitenwand (10) erstreckt, wobei sich die erste Gruppe von Ausrüstungsmodulen (12) entlang der ersten Seitenwand (8) erstreckt.

4. Schienenfahrzeug (1) nach Anspruch 3, wobei der Führerstand (6) einen Durchgang (36) umfasst, der sich zwischen dem vorderen Gangabschnitt (33) und dem hinteren Gangabschnitt (34) erstreckt.

5. Schienenfahrzeug (1) nach einem der Ansprüche 1 bis 4, wobei die erste Gruppe von Ausrüstungsmodulen (12) wartungsintensive Module umfasst, die durch eine durchschnittliche Wartungshäufigkeit von zwei Wartungsvorgängen pro Jahr oder mehr definiert sind, und die zweite Gruppe von Ausrüstungsmodulen (14) wartungsarme Module umfasst, die durch eine durchschnittliche Wartungshäufigkeit von weniger als zwei Wartungsvorgängen pro Jahr definiert sind.

6. Schienenfahrzeug (1) nach einem der Ansprüche 1 bis 5, umfassend mindestens eine Motorleistungseinheit (40), umfassend einen Dieselmotor (48) und ein Kühlaggregat (50), wobei die erste Gruppe von Ausrüstungsmodulen (12) das Kühlaggregat (50) umfasst und die zweite Gruppe von Ausrüstungsmodulen (14) den Dieselmotor (48) umfasst.

7. Schienenfahrzeug (1) nach einem der Ansprüche 1 bis 6, wobei die erste Gruppe von Ausstattungsmodulen (12) mindestens eine Klimatisierungseinheit (42) umfasst.

8. Schienenfahrzeug (1) nach einem der Ansprüche 1 bis 7, mindestens umfassend eine Kompressions- und Transformationseinheit (44), umfassend einen Luftkompressor (52) und einen Transformator (54), wobei die erste Gruppe von Ausstattungsmodulen (12) den Kompressor (52) umfasst und die zweite Gruppe von Ausstattungsmodulen (14) den Transformator (54) umfasst.

9. Schienenfahrzeug (1) nach einem der Ansprüche 1 bis 8, mindestens umfassend eine Antriebseinheit (46), umfassend eine elektronische Gruppe (56) und ein Kühlsystem (58), wobei die erste Gruppe von Ausstattungsmodulen (12) das Kühlsystem (58) umfasst und die zweite Gruppe von Ausstattungsmodulen (14) die elektronische Gruppe (56) umfasst.

## Claims

1. A rail vehicle (1) comprising a chassis (4) having a longitudinal axis X extending between first (8) and second (10) side walls and comprising at least a first group of low maintenance equipment modules (12) and at least a second group of high maintenance equipment modules (14), the rail vehicle (1) comprising at least one gangway (16) having a longitudinal axis in the direction X;
**characterised in that** the first group of equipment modules (12) extends along at least part of the first side wall (8) or the second side wall (10), the gangway (16) extends along at least part of the first side wall (8) or the second side wall (10) and the second group of equipment modules (14) extends between the first group of equipment modules (12) and the gangway (16), against said first group of equipment modules (12).

2. Railway vehicle (1) according to claim 1, further comprising a driver's cab (6), the gangway (16) extending on either side of the driver's cab (6) in the longitudinal direction.

3. Railway vehicle (1) according to claim 2, wherein the gangway (16) comprises a front gangway section (33) extending, on one side of the driver's cab (6), along the first side wall (8), the first group of equipment modules (12) extending along the second side wall (10), and, on the other side of the driver's cab (6), a rear gangway section (34) extending along the second side wall (10), the first group of equipment modules (12) extending along the first side wall (8).

4. A rail vehicle (1) according to claim 3, wherein the driver's cab (6) comprises a passageway (36) extending between the front gangway section (33) and the rear gangway section (34).

5. A rail vehicle (1) according to any one of claims 1 to 4, wherein the first group of equipment modules (12) comprises high maintenance modules defined by an average maintenance frequency greater than or equal to two maintenance operations per year and the second group of equipment modules (14) comprises low maintenance modules defined by an average maintenance frequency less than two maintenance operations per year.

6. Railway vehicle (1) according to any one of claims 1 to 5, comprising at least one engine power unit (40) comprising a diesel engine (48) and a cooling unit (50), the first group of equipment modules (12) comprising said cooling unit (50) and the second group of equipment modules (14) comprising said diesel engine (48).

7. A rail vehicle (1) according to any one of claims 1 to 6, wherein the first group of equipment modules (12) comprises at least one air conditioning unit (42).

8. Railway vehicle (1) according to any one of claims 1 to 7, comprising at least one compression and transformation unit (44) comprising an air compressor (52) and a transformer (54), the first group of equipment modules (12) comprising said compressor (52) and the second group of equipment modules (14) comprising said transformer (54).

9. Railway vehicle (1) according to any one of claims 1 to 8, comprising at least one traction unit (46) comprising an electronic assembly (56) and a cooling system (58), the first group of equipment modules (12) comprising said cooling system (58) and the second group of equipment modules (14) comprising said electronic assembly (56).
